(19) **Europäisches Patentamt European Patent Office Office européen des brevets**

(11) **EP 2 433 839 B1**

(12) **EUROPEAN PATENT SPECIFICATION**

(45) Date of publication and mention
of the grant of the patent:
**10.10.2012 Bulletin 2012/41**

(51) Int Cl.:
***B60T 8/17*** *(2006.01)* ***B60T 8/1755*** *(2006.01)*

(21) Application number: **10178304.1**

(22) Date of filing: **22.09.2010**

(54) **Method for a stability control of a trailer**

Verfahren zur Stabilitätskontrolle eines Anhängers

Procédé de contrôle de stabilité d'une remorque

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**28.03.2012 Bulletin 2012/13**

(73) Proprietor: **Haldex Brake Products AB S-261 24 Landskrona (SE)**

(72) Inventor: **Drenth, Edo Frederik 25450 Helsingborg (SE)**

(74) Representative: **Hinrichs, Nikolaus Wolfgang Rehberg Hüppe + Partner Nikolausberger Weg 62 37073 Göttingen (DE)**

(56) References cited:
**WO-A1-2006/040343     DE-A1-102006 051 908 DE-A1-102007 061 836     DE-A1-102008 042 914 US-A1- 2006 136 112**

EP 2 433 839 B1

## Description

## TECHNICAL FIELD OF THE INVENTION

The invention relates to a method for a stability control of a semi-trailer or a center axle trailer.

## BACKGROUND ART

DE 10 2008 028 981 A1 discloses an electronic stability control system for a tractor with a trailer. The electronic stability control system uses measured data as a velocity, an acceleration, a yaw angle, a yaw acceleration, a yaw rate, a lateral acceleration, a rolling angle, a rolling angular velocity and/or a rolling angular acceleration. From the data related to the movement of the tractor and/or trailer an instability parameter of the vehicle is determined. The instability, which is then compared with a plurality of pre-determined thresholds or with characteristic diagrams. Independent on the result of the aforementioned comparison, three different steps of an automated brake action might be activated: In a warning step an automated brake action solely of the trailer is initiated. Furthermore, during the warning step it is possible to move the brakes shoes of the tractor towards a "kiss point" in the intermediate neighbourhood of the brake disks or drums for shortening the activation time for a possible subsequent brake action. For an increased instability parameter the next step with a so-called "partial interaction" with the tractor is initiated wherein the drive moment of the tractor is automatically reduced by an interaction with a throttle valve or another engine controller of the combustion engine. The automated brake action solely of the trailer leads to an increase of the pulling force between the tractor and the trailer with the result of a kind of "stretch brake" keeping the chain of the tractor and the trailer closer to a coaxial alignment. Furthermore, the partial interaction gives a haptic feedback to the driver of the trailer. However, in this step the driver is still able to influence the movement of the vehicle. e.g. by increasing or reducing the drive moment of the engine also leading to an accelerating force being larger than the decelerating force caused at the trailer. Finally, for further increased instability parameter a step with a so-called "complete interaction" is initiated wherein both the tractor as well as the trailer are automatically braked. The document mentions both the automated control of one single brake related with a wheel of the trailer, a group of brakes or all of the brakes of the trailer.

DE 39 19 347 C3 relates to an electronic stability control system for avoiding understeering or oversteering of a vehicle when driven in a curve with constant velocity, accelerated velocity or decelerated velocity. From the vehicle velocity u sensed at each wheel and a steering angle δ measured at the steering wheel. A control unit determines a desired yaw rate $r_{zdes}$. Here the desired yaw rate $r_{zdes}$ is determined on the basis of the following equation

$$\frac{r_{zdes}}{\delta} = \frac{u}{L + K_{us}\dfrac{u^2}{g}}$$

wherein L denotes the distance of the axles in longitudinal direction, g denotes the acceleration due to gravitation and $K_{us}$ denotes the understeering coefficient of the vehicle, i.e. a fixed stability factor related to the respective vehicle. Furthermore, the actual yaw rate r is determined by a yaw rate gyroscope located at or close to the center of gravity of the vehicle. The difference of the actual yaw rate r from the desired yaw rate $r_{zdes}$ is taken as an indicator for an understeering or oversteering state of the vehicle. This indicator is then used for automatically changing the brake force caused at the radial inner or outer wheels by the brake actuator: In case of an understeering state being indicated, the brakes at the inner side of the curve are applied with an increased brake pressure and/or the brakes located at the outer side of the curve are applied with a decreased brake pressure. The opposite applies for an oversteering state being indicated.

The stability control system known from DE 196 02 879 C1 avoids a rolling movement of the vehicle leading to an overturning of the vehicle in a curve. Here, a signal derived from the ABS- system indicating that the wheels at the inner side of a curve loose contact with the ground is used for automatically counteracting the starting rolling movement by changing the brake actuation, changing a steering angle and/or changing the throttle angle of the combustion engine. As an additional indicator for the risk of the vehicle overturning, a lateral acceleration might be sensed and compared with a predetermined threshold.

DE 10 2008 014 459 A1 relates to the stretching function of a tractor/trailer-combination. Such stretching function is used for keeping the tractor/trailer-combination in a stretched state with aligned longitudinal axes during a braking process with reduced traction during downhill drive. Furthermore, the stretching function might be used for testing the brake actuation of the trailer. The stretching function might also be used for checking the connection between the tractor and the trailer. Known solutions for guaranteeing the stretching function comprise a hand lever located in the cabin of the tractor activating a pressure control valve solely activating the brake of the trailer. The actuation of the pressure control valve requires the driver taking one hand from the steering wheel and activating the hand lever. In Western European countries these solutions are in general not admitted by the respective regulations. However, as an exception the activation of a brake of a trailer without any braking action of the tractor for a stretching function is allowed when automatically stabilizing the motion of the tractor/trailer-combination. DE 10 2008 014 459 A1 suggests locating a switch activated by hand or by food of the driver in case of the driver having the wish to perform a stretching function. The activation of the switch changes the brake system from a normal brake mode to a stretching brake mode. The extent of the brake actuation of the trailer during the stretching function is not dependent on the manual actuation of a pressure control valve but on the activation of the normal brake pedal. With the switch in the stretching function mode the activation of the brake pedal might solely cause an actuation of the brake of the trailer or the activation of both the brakes of the trailer and the brakes of the tractor with a given relation between those two brake systems. In case of detecting that an emergency brake actuation with the switch in the stretching function mode being necessary, it is possible to "overrun" the stretching function and causing an emergency brake with any of the brakes fully applied. Such emergency brake situation might be triggered by a complete actuation of the brake pedal and/or a very fast actuation of the brake pedal.

The electronic control stability system disclosed in DE 197 51 839 A1 for avoiding an overturning of a tractor/trailer-combination due to an undesired rolling overturning movement determines the numbers of revolutions of the wheels and the lateral acceleration and the yaw rate by means of separate sensors or from the sensed number of revolutions of the wheels. Furthermore, the absolute vehicle velocity as well as the longitudinal dynamics of the vehicle described by the drive slip and brake slip of the wheels is calculated. The dynamical rolling radius of the wheels is determined independent on the vehicle velocity and the lateral distance of the wheels of the vehicle, the yaw rate of the vehicle and the number of revolutions of the wheels are determined. An indicator of the tendency of the vehicle overturning by a rolling movement is determined from the dynamical radius of the wheels, the drive and brake slip, the lateral acceleration, the yaw rate of the vehicle and the load related to an axle. The indicator of the tendency of the vehicle overturning might be calculated on the basis of at least two differing strategies: According to the first strategy used for determining the indicator, the tendency for overturning by a rolling movement as indicated in case of one measure quantitatively describing a wheel behaviour exceeds a first threshold or is smaller than a second threshold and/or for at least one wheel a measure quantitatively describing the behaviour of the wheel in time is smaller than a given threshold and/or the absolute value of an inclination angle of a wheel axle is larger than a predetermined threshold. According to the second strategy, the tendency of overturning is indicated in case of the difference between the vehicle velocity and a predetermined velocity limit value is smaller than a given threshold, wherein the velocity limit value is dependent on the heights of the center of gravity of the vehicle. Dependent on the calculated indicator, the brakes and/or the combustion engine is controlled automatically for avoiding the overturning rolling movement. Furthermore, dependent on the indicator the vehicle suspension might be controlled. Furthermore, it is possible that the tendency of an overturning movement is evaluated on the basis of the absolute value of the lateral dynamic of the vehicle being larger than a given threshold.

Also DE 100 65 724 A1 bases on an analysis of a measured steering angle, yaw rate and a first lateral acceleration by a control unit. The document suggests considering a so-called swimming angle or body slip angle that should be kept below a limit value correlating with an unstable drive state of the vehicle. From the measured first lateral acceleration, the distance of the sensor for determining the first lateral acceleration from the center of gravity and the measured yaw rate the lateral acceleration of the center of gravity are calculated. The yaw rate might also be calculated on the basis of two sensors for measuring the lateral acceleration at two given distances from the center of gravity. An articulation angle of the longitudinal axis of the tractor and the trailer is determined from the integral over time of the difference of the yaw rates of the trailer and the tractor. Additionally, a roll velocity or roll angle might be measured.

EP 1 459 949 A1 relates to a semi-trailer. An overturning movement is avoided by automatically activating the brake system of the tractor and the trailer. As an indicator for a starting overturning movement, the rotational velocity of at least one wheel located at the inner side of the curve of the trailer, a rotational velocity of a wheel of the tractor, a determined brake slip and the averaged value of the rotational velocity of a plurality of wheels is analyzed. Furthermore, the document suggests activating a test brake action with an activation of the brake system of the trailer, wherein a wheel of the trailer located at the inner side of the curve is subjected with a brake force below the maximum brake force. This test brake action might be performed when the lateral acceleration exceeds a predetermined threshold.

Modern electronic stability control systems mandatory as of July 2010 on new braking systems as described in DE 196 02 879 C1, EP 1 459 949 A1 and DE 197 51 839 A1 require a lateral accelerometer and a measurement of the wheel speeds for estimating the yaw rate. On a 2S/2M-system the yaw rate estimation can take place only before a brake intervention unless there are unsensed axles to be braked. Instead, the yaw rate estimation can take place also during the envisioned intervention for a 4S/3M- or 4S/4M-system.

Further prior art is known from DE 10 2006 051 908 A1.

## OBJECT OF THE INVENTION

It is the object of the present invention to provide an improved or alternative method for a stability control of a semi axle trailer or center axle trailer. In particular the improvement is related to

- the efficiency of the stability control, e.g. with respect to trailer swing,
- the detection of an unstable drive situation of the trailer at an early state,
- the simplification of required data and sensors supplying such data and
- the control stability and robustness.

## SOLUTION

The object of the present invention is solved by a method for a stability control of a trailer comprising the steps according to independent claim 1. Further embodiments of the inventive method for a stability control of a trailer are specified in the dependent claims 2 to 7.

## SUMMARY OF THE INVENTION

The inventive concept for a stability control bases upon two aspects:

The **first aspect** is related to the detection of an unstable drive situation of the trailer or the detection of drive conditions of the trailer making an unstable drive condition probable for future times. For this aspect the invention suggests determining a lateral velocity rate of change $\dot{v}$ on the basis of

$$\dot{v} = a_y - ur$$

with the lateral acceleration $a_y$, the trailer velocity u and the yaw rate r. Here the lateral acceleration, the trailer velocity and/or the yaw rate might be directly measured by appropriate sensors or derived from indirect measurements. Furthermore, the invention also covers embodiments where the relevant values for the lateral acceleration, the trailer velocity and the yaw rate are estimated by known algorithms on the basis of auxiliary operating parameters or measured signals.

The above formula for the vehicle lateral velocity rate of change considers the product of the yaw rate and the vehicle velocity. The result of this product is the so-called steady-state lateral acceleration. The vehicle lateral velocity rate of change results from the difference of the lateral acceleration and the steady-state lateral acceleration. In case of the absolute value of the steady-state lateral acceleration being significantly larger than the dynamic lateral acceleration, the vehicle side slip angle is increasing rapidly and a trailer swing is in its infancy. So, according to the inventive determination of the vehicle lateral velocity rate of change, a sensible indicator for a present or upcoming unstable drive situation is given. Accordingly, the determined vehicle lateral velocity rate of change $\dot{v}$ is compared in one step of the inventive method with a threshold T. This constant might be a constant or which might be dependent on different drive or operating conditions, characteristics diagrams, the type of vehicle, the skill of the driver and the like.

The **second aspect** of the invention relates to the control step to be performed in case of detecting an existing or upcoming unstable drive state: In case of the determined vehicle lateral velocity rate of change $\dot{v}$ exceeding the threshold T the invention suggests to automatically initiate a brake actuation. Such brake actuation is controlled such that the likelihood of an unstable drive situation is at least decreased. However, the invention does not relate to a brake actuation of the whole brake system of the trailer or all of the brakes with the same brake force. Instead, according to the invention, a brake actuation of one curve outer wheel of the trailer or a plurality or all curve outer wheels of the trailer is initiated. The at least one curve outer wheel is chosen such that the yaw moment induced at the braked wheel counteracts the yaw rate.

Dependent on the type of trailer controlled, in particular the trailer being a semi-trailer or a center axle trailer, different curve outer wheels might be chosen.

For the inventive method for a stability control of the trailer the front axle curve outer wheel is controlled to have an automatically caused stabilizing brake force which is larger than an automatically caused stabilizing brake force at a rear axle curve outer wheel. This embodiment relies on the finding that an optimum for the brake forces at the different curve outer wheels both with respect to the stability control as well as with respect to a reduction of wear at the tyres requires a larger brake force at the front axle curve outer wheel than at the rear axle curve outer wheel for providing the same "efficiency" of the different brake forces. In particular, the mentioned relation between the different brake forces might be used for providing restoring moments counteracting the yaw rate, wherein the vector between the center of gravity and the contact area between the respective wheel and the underground has an orientation more or less perpendicular to the resulting force at the contact area (built by the vector sum of the lateral force and the brake force at this wheel).

According to another suggestion of the invention, the yaw rate is determined by a yaw rate sensor which directly or indirectly measures the yaw rate.

In particular for trailers that are not equipped with a yaw rate sensor for reducing the costs, another embodiment of the invention suggests determining the yaw rate from speeds of the wheels of the trailer on the basis of algorithms per se well known for the person with ordinary skill in the art (see also the prior art mentioned in the present patent application).

Another embodiment of the inventive method relates to embodiments of trailers comprising synchronizing means for coupling at least one curve inner wheel with the related curve outer wheel of the same axle. According to the invention, the synchronizing means is controlled in dependence on the determined vehicle lateral velocity rate of change $\dot{v}$. The coupling by the synchronizing means might be provided by limited slip differentials and/or brakes limiting the speed difference between the wheels related to one axle by means of shafts that connect both sides with a brake system. This might be in particular helpful in relation with a regenerative braking system as discussed in WO 2010/007411 A1.

According to another embodiment of the invention, during the stability control an automatically caused stabilizing brake force $F_B$ at an outer wheel is controlled to equal or to be limited to $F_{B,max}$ with $F_{B,max} = F_L\, t_w\, /\, (2d)$, wherein $F_L$ is the lateral force at the respective curve outer wheel, $t_w$ is the track width and $d$ the longitudinal distance of the respective curve outer wheel from the center of gravity. This rule is easy to implement in a control system for performing the inventive method but results in an effective control also decreasing the wear at the related tyre of the curve outer wheel. From the above formula it is obvious that the brake force automatically caused will be smaller for wheels having an increased distance $d$ from the center of gravity.

The above determination of the limit of the stabilizing brake force $F_{B,max}$ might be calculated and considered for the control of one single curve outer wheel. Another embodiment of the invention suggests determining the limits $F_{B.max}$ separately for the plurality of curve outer wheels for optimizing the caused brake force for a plurality of curve outer wheels or any curve outer wheel.

Another embodiment of the invention relates to the stability control of a center axle trailer wherein the center of gravity is located between a front axle and a rear axle, in particular close to the middle of the front and rear axle. Here the automatically caused stabilizing brake force $F_B$ at a curve outer wheel located in front of the center of gravity when seen in longitudinal direction is maximized but controlled for avoiding blocking of the wheel. Instead, the automatically caused stabilizing brake force $F_B$ at a curve outer wheel located behind the center of gravity when seen in longitudinal direction is controlled to equal or be limited to $F_{B,max}$ determined for this curve outer wheel. Accordingly, this embodiment of the inventive method uses different control strategies for different curve outer wheels.

The inventive control measures might be used without additional measures for a stability control of a trailer. However, it is also possible that additional measures, e.g. measures known from the above cited prior art, are superposed to the inventive measures for a stability control of a trailer. Without restricting the invention to the following example it is e.g. possible that the inventive measures are used cumulative, intermittent or alternatively in dependence on operating parameters to a stretching brake function used for aligning the tractor and the trailer. Such stretching brake function might require that also brakes of curve inner wheels are activated wherein such activation might be done with an amount smaller than that of the curve outer wheels.

## BRIEF DESCRIPTION OF THE DRAWINGS

Fig. 1    schematically shows a free body diagram of a semi-trailer with six wheels and the center of gravity in front of the front axle in a plain view.

Fig. 2    schematically shows a free-body diagram for a center axle trailer with six wheels and the center of gravity in the middle of the bogie in a plain view.

## DETAILED DESCRIPTION OF THE DRAWINGS

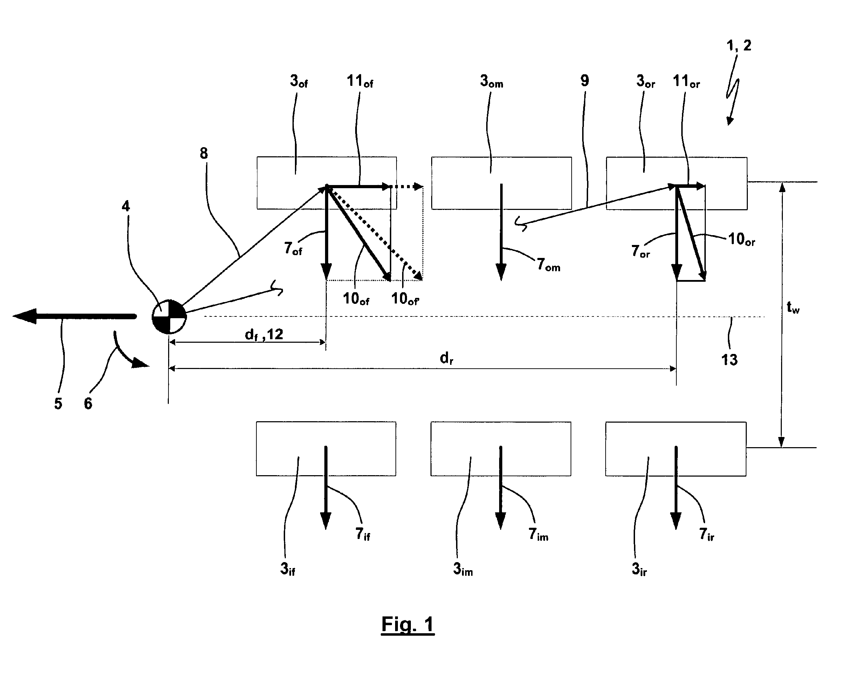

Fig. 1 shows schematically a trailer 1, here a semi-trailer 2 having six wheels 3. The trailer 1 moves in Fig. 1 to the left along a curve curved in counter-clockwise direction. In the drawings the curve inner wheels 3 are denoted with an index "i", whereas the curve outer wheels are denoted with an index "o". Furthermore, an index "f" denotes wheels related to a front axle, the index "m" denotes wheels related to a middle axle and the index "r" denotes wheels related to a rear axle.

The center of gravity 4 of the trailer 1 is located in front of the front axle with a distance $d_f$ and with a distance $d_r$ from the rear axle when seen in longitudinal direction of the trailer 1. The track width $t_w$ denotes the lateral distance of the curve inner wheels $3_i$ from the curve outer wheels $3_o$. The center of gravity 4 moves with a velocity u denoted with reference numeral 5 and with a yaw rate r denoted with reference numeral 6. Without the brakes of the trailer being applied, each wheel 3 is subjected to a lateral force 7 directed versus the center of the curve for moving the trailer 1 along the curve. The vector 8 is the vector from the center of gravity 4 to the contact area between wheel $3_{of}$ and the road, whereas the vector 9 is the vector from the center of gravity to the contact surface between wheel $3_{or}$ and the road. For a given yaw rate 6 and the given lateral force $7_{of}$ a moment having an axis perpendicular to the drawing plane results from the vector product of vector 8 and the vector of the lateral force $7_{of}$. This moment in fig. 1 counteracts the yaw rate 6. However, the angle between the vector 8 and the lateral force $7_{of}$ differs from 90°. When applying a brake force $7_{of}$ there is a resultant contact vector $10_{of}$ given by the vector sum of the lateral force $7_{of}$ and the brake force $11_{of}$. The orientation of the resultant contact vector $10_{of}$ is controlled by an adaptation of the brake force $11_{of}$. The brake force $11_{of}$ is controlled with the aim that the resultant contact vector $10_{of}$ has an orientation perpendicular to the vector 8. This leads to an optimum for the counteracting moment counteracting the yaw rate 6 by the resultant contact vector 10. For this optimal control of the brake force $11_{of}$ the triangle built by the lateral force $7_{of}$, the resultant contact vector $10_{of}$ and the brake force $11_{of}$ comprises the same corner angles as the triangle built by the longitudinal distance vector 12, the lateral distance vector between the center axis 13 and the vector 8. Accordingly, for the optimized resultant contact vector $10_{of}$ as shown in solid line in Fig. 1 the equation

$$F_{B,max} = F_L\, t_w\, /\, (2d_f)$$

holds, wherein the lateral force $F_L$ corresponds to $7_{of}$ and $F_{B,max}$ corresponds to the optimized brake force $11_{of}$. Furthermore, Fig. 1 shows with dashed lines the changed force triangle in case of the brake force $11_{of}$ exceeding the calculated optimized brake force $F_{B,max}$. Here the resultant contact vector $10_{of}$ is longer than the optimized resultant contact vector $10_{of}$ leading to an increased wear at the wheel $3_{of}$. However, the resultant contact vector $10_{of}$ is not optimal for an effective production of a moment counteracting the yaw rate 6 which is due to the fact that the vector 8 and the resultant contact vector $10_{of}$ build an angle larger than 90°.

Fig. 1 also shows the optimized force triangle for the wheel $3_{or}$. Due to the changed orientation of the vector 9 with respect to vector 8 the required optimized brake force $11_{or}$ is smaller than the optimized brake force $11_{of}$ for producing a resultant contact vector $10_{or}$ having an orientation perpendicular to the vector 9.

According to the invention the brake forces applied upon wheels $3_o$ are separately calculated and controlled to equal or to be limited to the individual values of $F_{B,max}$. This leads to an effective method for a stability control of a trailer with reduced wear at the brakes and the tyres. These inventive measures reduce the trailer yaw acceleration and thereby suppress trailer swing. The closer the center of gravity is to the front bogie axle the larger is the effect caused by the brake force $11_{of}$. Hence, semi-trailers 2 will highly benefit from the inventive method. Accordingly, for some embodiments, in particular for semi-trailers 2, it might be sufficient for controlling the brake force 11 of of the curve outer wheel $3_{of}$ of the front axle.

It is possible that the yaw rate 6 is derived from the speed of the wheels 3 in order not to add costs to the system. Special care will be taken in doing so, because trailer tyres will have changing effective rolling radii while negotiating a curve. The relative high position of the center of gravity for trailers leads to large load transfers that in its turn lead to possibly significant rolling radii changes. In 4S/3M-systems and 4S/4M-systems the yaw rate estimation can also take place under an intervention, but in a 2S/2M-system in some cases it cannot. Instead, in some cases here the intervention may be intermittent. The above described methodology can also be seen as an active yaw damping of towed vehicles. The inventive method has an advantage above stretch braking methodology by means of a reduced brake and tyre wear. Stretch braking can be seen as passive yaw damping, whereas the inventive braking is an active yaw damping. In case of the brake forces at the wheel $3_o$ exceeding the respective optimized brake forces $F_{B,max}$ the moment arm for producing the moment counteracting the yaw rate 6 reduces (apart from the fact that there will be a potential risk to reduce lateral force as well). From this analysis it is clear that intervening on the front outer wheel $3_{of}$ might have the most control authority, whereas the methodology might be less effective on full trailers, because the parameter d would be larger.

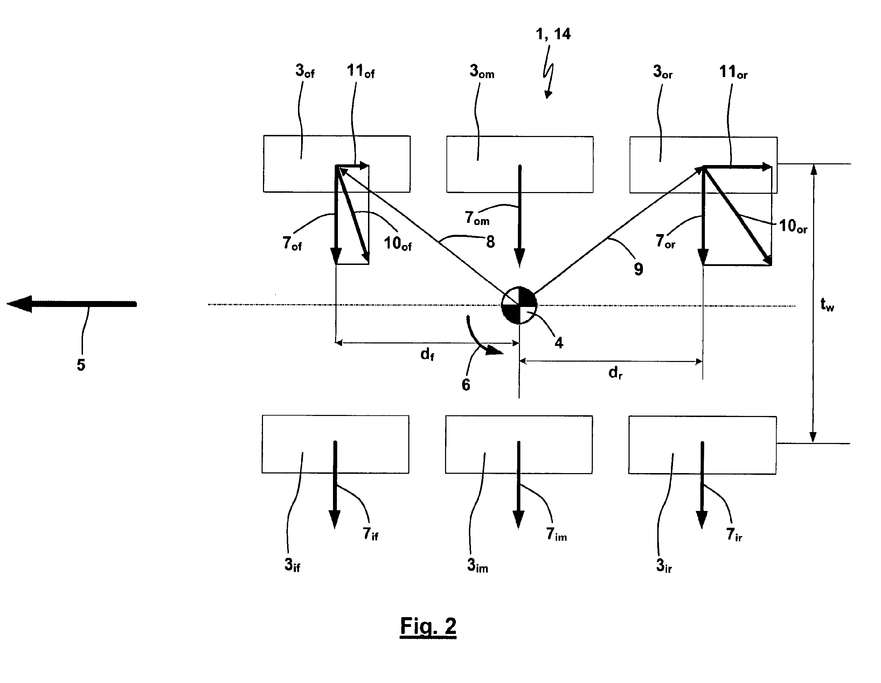

**Fig. 2** shows the free-body diagram of a center axle trailer 14. Whereas for the semi-trailer 2 according to Fig. 1 the lateral forces 7 cause moments each counteracting the yaw rate 3, the lateral forces $7_f$ of the wheels $3_f$ of the front axle support the yaw rate 6, whereas the lateral forces $7_m$ of the wheels $3_m$ of the middle axle are (more or less, dependent on the position of the center of gravity) neutral with respect to the yaw rate 6. The lateral forces $7_r$ of the wheels $3_r$ of the rear axle cause a moment counteracting the yaw rate 6. In this case, applying a brake force $11_{of}$ at wheel $3_{of}$ decreases the angle built between vector 8 and lateral force $7_{of}$ leading to a reduction of the momentum supporting the yaw rate 6. Further increase of the brake force $11_{of}$ brings the resultant contact vector $10_{of}$ in alignment with vector 8 decreasing the supporting moment to zero. A further increase of the brake force $11_{of}$ would cause a moment counteracting yaw rate 6. Accordingly, the maximum counteracting moment would be caused at the maximum braking force with a neglectable lateral force $7_{of}$ meaning a blocking wheel $3_{of}$. This of course has disadvantages on tyre wear and brake wear. Accordingly, the brake force $11_{of}$ at wheel $3_{of}$ is maximized but controlled by an anti-blocking algorithm and device. Instead for the curve outer wheel $3_{or}$ of the rear axle the aforementioned equation for determining an optimized maximum for the brake force $F_{B,max}$ applies. This value $F_{B,max}$ is used for controlling the brake force $11_{or}$ which is limited to or equals $F_{B,max}$.

Braking more than one wheel $3_o$ would increase the effect of the counteracting moment. However, the control of more than one wheel $3_o$ might deteriorate the yaw rate estimation from the speed signals of the wheels which might be one reason for controlling only the force of one curve outer wheel $3_o$.

According to one embodiment of the invention the counter acting yaw moment does not reach its maximum with $F_{B,max}$, but the moment arm reaches its maximum. "Small" brake forces stabilize the trailer. Large brake forces (towards wheel lock) will reduce the lateral tyre force and thereby reduce the counter acting yaw moment. The control may gently apply the brakes and the output of this control is limited to $F_{B,max}$ when the tyre slip angles are relatively large. The control will not intervene when the slip angles are small. Also, tyres experiencing large slip angles will not (or hardly) increase the force vector length and the brake application becomes solely a vector orientation changing operation.

In case of detecting the system running versus exhausted lateral forces or full utilised friction in lateral direction, an automatically caused small brake torque application will turn the tyre force vector in the ground and increase the yaw resistive moment.

## LIST OF REFERENCE NUMERALS

| | |
|---|---|
| 1 | trailer |
| 2 | semi-trailer |
| 3 | wheel |
| 4 | center of gravity |
| 5 | velocity u |
| 6 | yaw rate r |
| 7 | lateral force |
| 8 | vector |
| 9 | vector |
| 10 | resultant contact vector |
| 11 | brake force |
| 12 | longitudinal distance vector |
| 13 | center axis |
| 14 | center axle trailer |

**Claims**

1. Method for a stability control of a semi-trailer (2) or a center axle trailer (14) comprising the steps of:

   a) determining a trailer lateral velocity rate of change $\dot{v}$ on the basis of $\dot{v} = a_y - ur$ with ay: lateral acceleration
   u: trailer velocity and
   r: yaw rate
   or determining a trailer slip angle rate $\dot{\beta} = \dot{v} / u$
   b) comparing the determined trailer lateral velocity rate of change $\dot{v}$ or the determined trailer slip angle rate $\dot{\beta}$ with a threshold T,
   c) in case of the determined trailer lateral velocity rate of change $\dot{v}$ or the determined trailer slip angle rate $\dot{\beta}$ exceeding the threshold T automatically initiating a brake actuation of at least one curve outer wheel ($3_o$) of the trailer (2; 14),
   d) wherein the front axle curve outer wheel ($3_{of}$) is controlled to have an automatically caused stabilizing brake force ($11_{of}$ which is larger than an automatically caused stabilizing brake force ($11_{or}$) at a rear axle curve outer wheel ($3_{or}$).

2. Method of claim 1, wherein the yaw rate r (6) is determined from the speeds of wheels (3).

3. Method of claim 1, wherein the yaw rate r (6) is determined by a yaw rate sensor.

4. Method of claim 1, wherein curve inner wheels ($3_i$) and curve outer wheels ($3_o$) are coupled by a synchronizing means wherein the synchronizing means is controlled in dependence on the determined trailer lateral velocity rate of change $\dot{v}$ or the determined trailer slip angle rate $\dot{\beta}$.

5. Method of one of the preceding claims, wherein an automatically caused stabilizing brake force $F_B$ ($11_o$) at a curve outer wheel ($3_o$) is controlled and limited to $F_{B,max}$ with
   $F_{B,max} = F_L \, t_w / (2d)$
   with $F_L$: Lateral force ($7_o$) at the wheel ($3_o$),
   $t_w$: track width and
   d: longitudinal distance of the curve outer wheel ($3_o$) from the center of gravity.

6. Method of claim 5, wherein automatically caused stabilizing brake forces $F_B$ ($11_o$) at a plurality of curve outer wheels ($3_o$) are each controlled to equal or be limited to $F_{B,max}$ determined separately for the plurality of curve outer wheels ($3_o$).

7. Method of one of the preceding claims applied for the stability control of a center axle trailer (3) with the center of gravity (4) located between a front and a rear axle wherein

   a) the automatically caused stabilizing brake force $F_B$ ($11_{of}$) at a curve outer wheel ($3_o$) located in front of the center of gravity (4) when seen in longitudinal direction is maximized but controlled for avoiding blocking of the wheel ($3_o$) and
   b) the automatically caused stabilizing brake force $F_B$ ($11_{or}$) at a curve outer wheel located behind the center of gravity when seen in longitudinal direction is controlled to equal or be limited to $F_{B,max}$ determined for this curve outer wheel ($3_{of}$).

**Patentansprüche**

1. Verfahren zur Stabilitätsregelung eines Sattelanhängers (2) oder Zentralachsanhängers (14) mit folgenden Verfahrensschritten:

   a) Ermittlung einer lateralen Geschwindigkeitswechselrate $\dot{v}$ des Anhängers auf der Basis von
   $\dot{v} = a_y - ur$
   mit

$a_y$: lateraler Beschleunigung
u: Anhängergeschwindigkeit und
r: Gierrate

oder Ermittlung einer Schräglaufwinkelrate des Anhängers $\text{ß} = \dot{v}/u$ ,
b) Vergleichen der ermittelten lateralen Geschwindigkeitswechselrate $\dot{v}$ oder Schräglaufwinkelrate $\text{ß}$ mit einem Schwellwert T,
c) im Fall, dass die ermittelte Geschwindigkeitswechselrate $\dot{v}$ oder die ermittelte Schräglaufwinkelrate $\beta$ den Schwellwert T überschreitet: automatische Initiierung einer Bremsbetätigung zumindest eines kurvenäußeren Rads ($3_o$) des Anhängers (2; 14),
d) wobei das kurvenäußere Rad ($3_{of}$) der Vorderachse hinsichtlich einer automatisch verursachten stabilisierenden Bremskraft ($11_{of}$) gesteuert oder geregelt wird, die größer ist als eine automatisch erzeugte stabilisierende Bremskraft ($11_{or}$) an einem kurvenäußeren Rad ($3_{or}$) der Hinterachse.

2. Verfahren nach Anspruch 1, wobei die Gierrate r (6) aus den Geschwindigkeiten der Räder (3) ermittelt wird.

3. Verfahren nach Anspruch 1, wobei die Gierrate r (6) durch einen Gierratensensor ermittelt wird.

4. Verfahren nach Anspruch 1, wobei kurveninnere Räder ($3_i$) und kurvenäußere Räder ($3_o$) durch ein synchronisierendes Organ gekoppelt sind und das synchronisierende Organ in Abhängigkeit von der ermittelten lateralen Geschwindigkeitswechselrate $\dot{v}$ oder der ermittelten Schräglaufwinkelrate $\beta$ gesteuert oder geregelt wird.

5. Verfahren nach einem der vorhergehenden Ansprüche, wobei eine automatisch erzeugte stabilisierende Bremskraft $F_B$ ($11_o$) an einem kurvenäußeren Rad ($3_o$) auf $F_{B,max}$ gesteuert oder geregelt und begrenzt wird mit

$$F_{B,max} = F_L\, t_w/(2d)$$

mit

$F_L$: laterale Kraft ($7_o$) an dem Rad ($3_o$),
$t_w$: Spurbreite und
d: Längsabstand des kurvenäußeren Rads ($3_o$) von dem Schwerpunkt.

6. Verfahren nach Anspruch 5, wobei automatisch erzeugte stabilisierende Bremskräfte $F_B$ ($11_o$) an mehreren kurvenäußeren Rädern ($3_o$) jeweils so gesteuert oder geregelt werden, dass diese begrenzt sind auf $F_{B,max}$ oder $F_{B,max}$ entsprechen, wobei $F_{B,max}$ separat für die mehreren kurvenäußeren Räder ($3_o$) ermittelt worden ist.

7. Verfahren nach einem der vorhergehenden Ansprüche bei Anwendung auf die Stabilitätsregelung eines Zentralachsanhängers (3), bei dem der Schwerpunkt (4) zwischen einer vorderen und einer hinteren Achse angeordnet ist, wobei

a) die automatisch erzeugte stabilisierende Bremskraft $F_B$ ($11_{of}$) an einem kurvenäußeren Rad ($3_o$), welches bei Blickrichtung in Richtung der Längsachse vor dem Schwerpunkt (4) angeordnet ist, maximiert wird; aber zur Vermeidung eines Blockieren des Rads ($3_{of}$) gesteuert oder geregelt wird und
b) die automatisch erzeugte stabilisierende Bremskraft $F_B$ ($11_{of}$) an einem kurvenäußeren Rad, welches bei Blickrichtung in Richtung der Längsachse hinter dem Schwerpunkt angeordnet ist, gesteuert oder geregelt wird, um durch $F_{B,max}$ begrenzt zu sein oder $F_{B,max}$ zu entsprechen, wobei $F_{B,max}$ für dieses kurvenäußere Rad ($3_{of}$) ermittelt worden ist.

**Revendications**

1. Procédé de contrôle de stabilité d'une semi-remorque (2) ou d'une remorque à essieu central (14) comprenant les étapes consistant à :

a) déterminer un taux de changement de vitesse latérale de remorque $\dot{v}$ sur la base de $\dot{v} = a_y - ur$ avec ay : accélération latérale,
u : vitesse de remorque, et
r : amplitude de mouvement de lacet
ou déterminer une amplitude d'angle de glissement de remorque $\text{ß}=\dot{v}/u$
b) comparer le taux de changement de vitesse latérale de remorque $\dot{v}$ déterminé ou l'amplitude d'angle de glissement de remorque ß déterminée avec un seuil T,
c) dans le cas où le taux de changement de vitesse latérale de remorque $\dot{v}$ déterminé ou l'amplitude d'angle de glissement de remorque ß déterminée dépasse le seuil T, lancer automatiquement un actionnement de frein d'au moins une roue à l'extérieur de la courbe ($3_o$) de la remorque (2 ; 14),
d) dans lequel la roue à l'extérieur de la courbe d'essieu avant ($3_{of}$) est commandée pour avoir une force de freinage de stabilisation provoqué automatiquement ($11_{of}$) qui est supérieure à une force de freinage de stabilisation provoqué automatiquement ($11_{or}$) au niveau d'une roue à l'extérieur de la courbe d'essieu arrière ($3_{or}$).

**2.** Procédé selon la revendication 1, dans lequel l'amplitude de mouvement de lacet r (6) est déterminée à partir des vitesses des roues (3).

**3.** Procédé selon la revendication 1, dans lequel l'amplitude de mouvement de lacet r (6) est déterminée par un capteur d'amplitude de mouvement de lacet.

**4.** Procédé selon la revendication 1, dans lequel les roues à l'intérieur de la courbe $(3_i)$ et les roues à l'extérieur de la courbe $(3_o)$ sont accouplées par des moyens de synchronisation, dans lequel les moyens de synchronisation sont commandés en fonction du taux de changement de vitesse latérale de remorque $\dot{v}$ déterminé ou de l'amplitude d'angle de glissement de remorque ß déterminée.

**5.** Procédé selon l'une des revendications précédentes, dans lequel une force de freinage de stabilisation provoqué automatiquement $F_B$ $(11_o)$ au niveau d'une roue à l'extérieur de la courbe $(3_o)$ est commandée et limitée à $F_{B.max}$ avec
$F_{B.max} = F_L t_w / (2d)$
avec $F_L$ : force latérale $(7_o)$ au niveau de la roue $(3_o)$,
$t_w$ : largeur de voie, et
d : distance longitudinale de la roue à l'extérieur de la courbe $(3_o)$ par rapport au centre de gravité.

**6.** Procédé selon la revendication 5, dans lequel les forces de freinage de stabilisation provoqué automatiquement $F_B$ $(11_o)$ au niveau d'une pluralité de roues à l'extérieur de la courbe $(3_o)$ sont commandées chacune pour être égales ou pour être limitées à $F_{B \cdot max}$ qui est déterminé séparément pour la pluralité de roues à l'extérieur de la courbe $(3_o)$.

**7.** Procédé selon l'une des revendications précédentes appliqué pour le contrôle de stabilité d'une remorque à essieu central (3) avec le centre de gravité (4) situé entre un essieu avant et un essieu arrière, dans lequel

a) la force de freinage de stabilisation provoqué automatiquement $F_B$ $(11_{or})$ au niveau d'une roue à l'extérieur de la courbe $(3_o)$ située à l'avant du centre de gravité (4) lorsqu'elle est vue dans la direction longitudinale est augmentée à un maximum, mais contrôlée pour éviter un blocage de la roue $(3_{of})$, et
b) la force de freinage de stabilisation provoqué automatiquement $F_B$ $(11_{or})$ au niveau d'une roue à l'extérieur de la courbe située à l'arrière du centre de gravité lorsqu'elle est vue dans la direction longitudinale est contrôlée pour être égale ou pour être limitée à $F_{B.max}$ qui est déterminé pour cette roue à l'extérieur de la courbe $(3_{or})$.

**Fig. 1**

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102008028981 A1
- DE 3919347 C3
- DE 19602879 C1
- DE 102008014459 A1
- DE 19751839 A1
- DE 10065724 A1
- EP 1459949 A1
- DE 102006051908 A1
- WO 2010007411 A1